# EUROPEAN PATENT APPLICATION

(11) **EP 1 928 188 A1**
(43) Date of publication of application: **04.06.2008**
(21) Application number: 06024961.2
(22) Date of filing: 01.12.2006
(51) Int. Cl.: H04Q 7/28

(54) **Floor control for push-to-translate-speech (PTTS) service**

(71) Applicant: Siemens Networks GmbH & Co. KG, 81541 München (DE)
(72) Inventor: Delgado, Jose, 2790-105 Carnaxide (PT); Moritz, Peter, 85540 Haar (DE); Pereira, Paulo Jorge, 1600-416 Lisboa (PT)
(74) Representative: Maier, Daniel Oliver

(57) **Abstract**

A floor control method of a Push-To-Translate-Speech translation service comprising a block-wise speech transmission over a wireless network (3), from a first user terminal (1) in the source language to a second user terminal (2), or to a plurality of second user terminals in the target language, employing a Push-To-Talk (PTT) terminal (1, 2) with a PTT-key and a translation server (4).

## Description

The present invention relates to a signalling method of a Push-To-Translate-Speech (PTTS) translation service system. Such system, based on Push-To-Talk (PTT) voice and multimedia communication service, realises a block-wise speech transmission over a wireless network from a first user terminal in the source language to a second user terminal or to a plurality of second user terminal in the target language. More specifically, the present invention relates to a method and an apparatus for controlling the floor of different user terminals connected to a translation server during the conversation phase and the translation session.

Multilingual spoken language services are a growing branch. Telephone companies in the United States, Europe, and Japan now offer language translation services over the telephone, provided by human operators. The drive to automate information services, however, produces a growing need for automated multilingual speech processing, in which a translator server replaces the human operators.

Telephony automatic translation and interpretation services in real time are based on a network of different user terminals. These terminals cannot send the information data simultaneously. Once a user terminal has transmitted the data to be translated, it is necessary that the other terminals wait for the corresponding turn before speaking/transmitting, while the translator server outputs the translated message in the correct language. The employment of a Push-To-Talk method can make these services faster and more efficient.

Push-To-Talk (PTT) is a method of transmitting data on half-duplex communication lines, meaning that communication can only be transmitted in one direction at any given moment. To control which person can speak and be heard at a certain terminal, PTT requires the person speaking to press a button at her/his terminal while talking and then release it after having finished to speak. In order to respond to the received speech, the listener will press the button at her/his terminal and will start to answer.

More recently, the PTT concept has been adopted by cellular-phone carriers as a way to instantaneously send transmissions to other user terminals of the system, emulating "walkie-talkie" communications on a mobile phone network. In this service, several predefined group users participate in one session. PTT over Cellular (PoC) service, offered by some mobile carriers, adds functionality for individual half-duplex transmissions to be sent to another party on the system without needing an existing connection to be already established.

For the transmission of audio data between user terminals, the real-time transport protocol (RTP) as well as the RTP control protocol (RTCP) are used. The latter is used to ensure the quality of the audio channel.
In order to obtain the permission to speak, the user has to request the floor from the server. This is necessary to guarantee that only one participant at a time is allowed to transmit audio data. When the server receives such a request it can allow or reject it. Additionally, the server can revoke the right to speak at any time. The protocol that is used for floor control is called the talk burst control protocol (TBCP) and it uses RTCP messages for the exchange of information. A floor control mechanism is used to arbitrate requests for the rights to transmit from different user terminals of the group. The talk burst generated by the transmitting user terminal is packetized and streamed to the receiving user terminal.
In a typical floor control process, the RTCP message is employed to ensure singular access to the PoC media resource. At first, the floor is requested by the transmitting user terminal. The PoC server can grant or deny this request and notifies it to the user terminal. If the floor is granted, the user terminal takes it till the complete transmission of the data. Finally the user terminal releases the floor and notifies it to the server. Similarly, the receiving user terminal can take the floor after receiving the data.

The application of a PTT method clearly improves the efficiency of an automatic translation service. However, a correct and appropriate floor control is required, in order to avoid overlapped transmission data and/or incorrect formulation of the sentences to be translated.

In WO 2005/048509 A2, a system and a method for translating voice data over a half duplex communication network is described. In this application, a method is disclosed in which the translator means starts outputting the translated message only after the user terminal has checked the text for possible mistakes and has given the approval. This clearly slows down the entire translation process and makes the translation voice communication output strictly connected to the PTT-key button function of the user terminal taking the floor, that means, once the PTT-key button has been deactivated and the transmission of the translated data to the counterpart has been started, the user terminal must wait for the completion of the translated output before having the possibility to recapture the floor.

Also, it should be taken into consideration, that the block-wise transmissions employed in an automatic translation service system are time shifted by the time lapse of the translation process receiving the first input in the source language and generating the first output in the target language. Moreover, the original and the translated data-blocks differ in length and duration, as governed by language characteristics. These features can lead to inconsistent signalling related to the PTT-key button function thus affecting the floor control function.

It is an object of the present invention to provide an improved signalling method of a Push-To-Translate-Speech translation service, which method in particular enhances the usefulness of the service and helps to avoid difficulties and undue delays in the translation process. Furthermore, it is an object of the invention to provide a corresponding apparatus of a PTTS service, which apparatus makes advantage of the improved method.

This object is solved by a floor control method having the features as described in claim 1 and an apparatus having a floor controller as described in claim 10.

To increase the efficiency of an automatic translation service by making the process faster and by overcoming the problem of inconsistent signalling related to the PTT button function affecting the floor control function, in the preferred embodiment of the present invention a translation service apparatus and an improved floor control method thereof is described.

The accompanying drawings illustrate preferred embodiments of the invention and together with the description serve to explain the principles of the inventions.
Fig. 1 is a functional block diagram of an apparatus of a Push-To-Translate-Speech translation service;
Fig. 2 is a flow-chart diagram of a floor control method of a Push-To-Translate-Speech translation;
Fig. 3 shows a timing diagram describing the floor control function and the notification of the floor condition.

Reference is now made in detail to the present preferred embodiments of the invention illustrated in the accompanying drawings.
The invention supposes that the service and session establishment have been realised and the appropriate resources are available, such as PTT-enabled terminal, addressable translation server, etc... The present invention particularly covers the floor control and the notification to the user terminal thereof during the conversation phase of the translation session.

A block-wise speech transmission is employed from a first user terminal in the source language to a second user terminal or to a plurality of second user terminals in the target language, by means of Push-To-talk (PTT) terminals having a PTT-key button and a translation server. After the PTT-key button has been pressed at the first user terminal, the speech can begin. The translation server receives the input form the first user terminal in the source language, translates sentence by sentence, or consecutive sentences, and outputs the translation to the second user terminal. In the following, the translation direction from the first to the second user terminal is considered. For the reverse direction the same functions with the corresponding problems and solutions will occur.

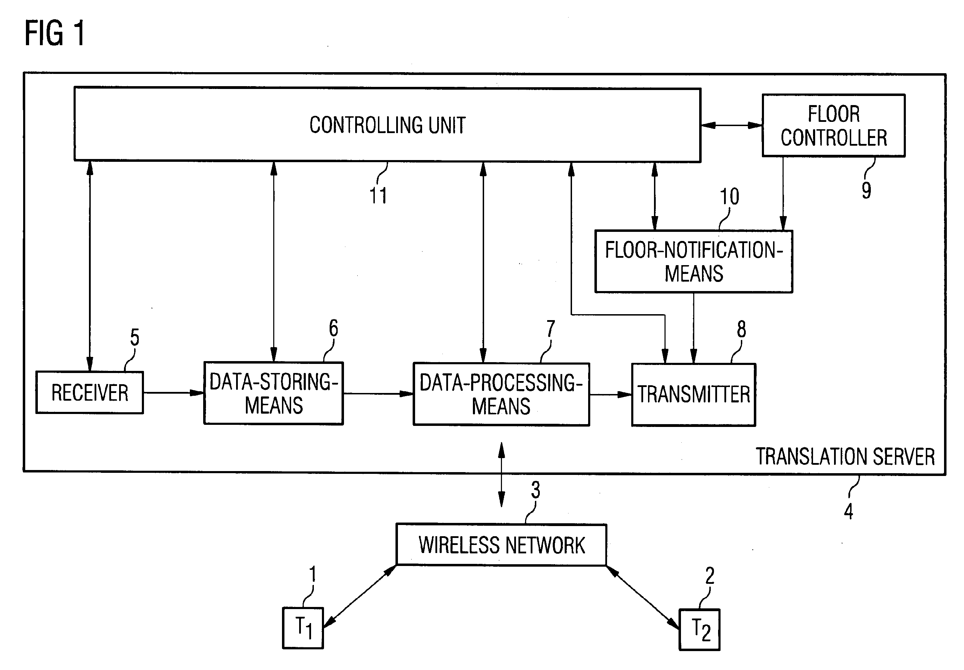

In figure 1 a block-diagram describing the apparatus of the PTTS translation service system is shown. A first user terminal T₁ 1 is connected, over a wireless network 3, to a translation server 4 and, through this server, to a second user terminal T₂ 2 or to a plurality of second user terminals. The translation server comprises receiver 5 to receive, by means of a receiving antenna, the data sent by the terminals. The output of the receiver is connected to the input of a data-storing-means 6. Here the data are temporarily held, waiting to be sent to the input of a dataprocessing-means 7 where they will be processed. The output of the data-processing-means is connected to the input of a transmitter 8 which will send the data to the terminals by means of a transmitting antenna. The apparatus also comprises floor controller 9, which is employed to control the floor of the user terminals connected to the wireless network. In particular, the floor controller maintains the floor locked against the second user terminal after the PTT-key has been deactivated at the first user terminal and releases the floor after the translation server has completed the translated output. The floor controller can be either an internal or an external component of the translation server, as employed by other PTT conference services, to which the translation server signals the floor seizure/taken/lock and release commands. The translation server also includes floor-notification-means 10 whose input is connected to the floor controller and whose output is connected to the transmitter in order to notify the user terminals about the floor condition before, during, and after the translation process. Further, control unit 11, comprised in the translation server, is employed for an overall control of the means present in the system.

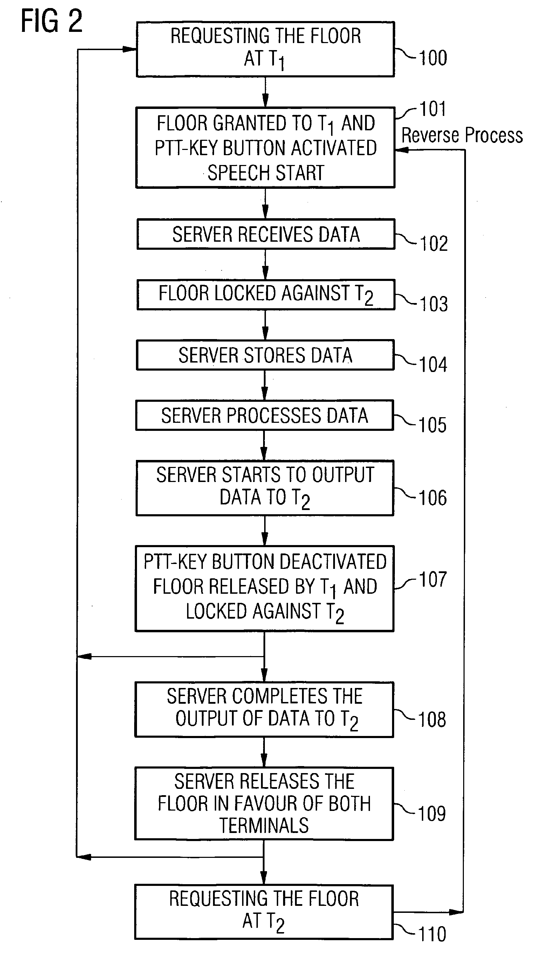

In figure 2 a flow-chart diagram describes the floor control method in a PTTS service system. At step 100, the floor is requested from the first user terminal. Once the floor is granted, the speech can be initiated at the first user terminal in the source language by activating the PTT-key button (step 101). At step 102, the translation server receives the input data from the first user terminal. As soon as the data are received, the floor controller locks the floor against the second user terminal preventing any possibility to take the floor and start speaking at this terminal (step 103). After this step, the translation process starts and develops. The data are stored in a data-storing-means (step 104), are processed in the data-processing-means by translating them from the source language to the target language (step 105), and are firstly outputted to the second user terminal in the target language (step 106). At step 107, the speech at the first user terminal is terminated and the PTT-key button is deactivated. The floor is released by the first user terminal but it remains locked against the second user terminal. In the lapse of time before the translation server has completed to output the translation to the second user terminal, the first user terminal has the possibility to request the floor again and to restart the process from the step 100. At step 108 the translation server has completed the output of the processed data to the second user terminal and at step 109 the floor controller releases the floor in favour of both the user terminals giving to any user the possibility to seize the floor. In the case the floor is requested by the second user terminal (step 110), a reverse process, in which the actions of the first user terminal are performed by the second user terminal and vice versa, starts from the step 101. Otherwise, if the floor is requested by the first user terminal, the process restarts from the step 100.

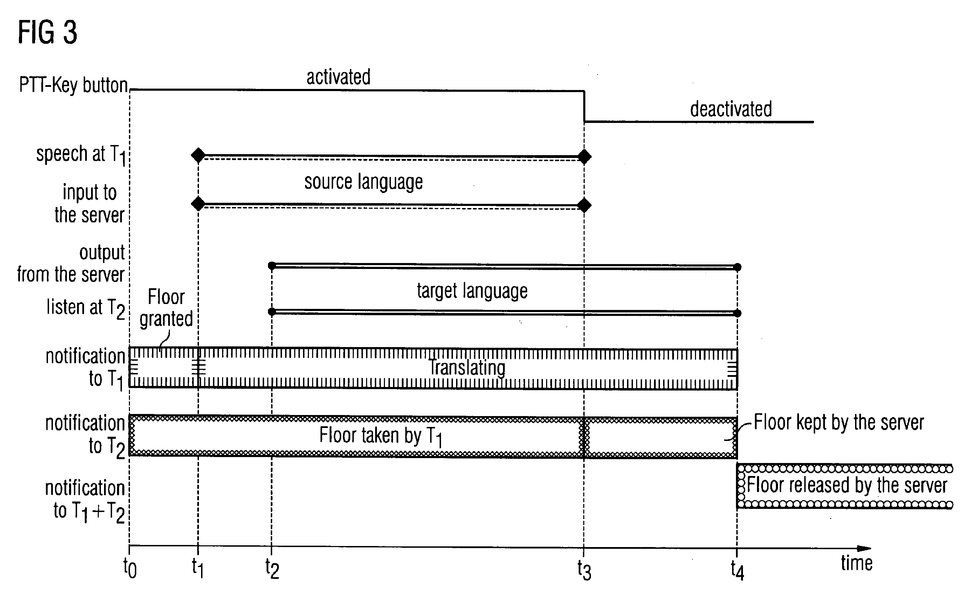

Figure 3 shows a timing diagram describing the floor control process during the period between the start of the speech at the first user terminal in the source language (at time t₁) and the completion of output of the processed data from the translation server to the second user terminal in the target language (at time t₄). Due to the difference in language characteristics between the source and the target language, the lapse of time between the first input of data in the translation server from the first user terminal (at time t₁) and the first output of data from the translation server to the second user terminal (at time t₂) is different from that between the end of the speech from the first user terminal (at time t₃) and the completion of output from the translation server to the second user terminal (at time t₄). Also, the floor condition notification to the first and second user terminal before, during, and after the translation process is shown in the figure. In particular, the floor condition is notified starting from the granting of the floor from the first user terminal (at time t₀) and ending after the completion of output of the translation from the translation server to the second user terminal (at time t₄).

In a preferred embodiment, the floor is requested at the first user terminal to the translation server. After the floor has been granted, the PTT-key button can be pressed or activated at the terminal (time t₀) and the speech can be initiated in the source language (at time t₁). By means of a receiver, the translation server receives the data sent by the first user terminal through a wireless network. The received data are stored in a data-storing-means while waiting to be processed. By employing a data-processing-means, the stored data are translated from the source language in the target language, whereas the target language is defined *a priori* by the second user terminal. The processed data are then transferred to the transmitter which will send them to the second user terminal (at time t₂). As soon as the translation server receives the input data from the first user terminal (at time t₂), the floor controller locks the floor against the second user terminal. After the speech is completed, the PTT-key button is deactivated at the first user terminal (at time t₃). As an innovative step of the invention, the floor controller overrides the PTT-key button of the first user terminal by leaving the floor locked against the second user terminal. Only when the translation server has completed the output of the translated data (at time t₄), the floor controller releases the floor in favour of both user terminals.

As an additional convenience feature, during the period between the deactivation of the PTT-key button (at time t₃) and the completion of output of the translation from the translation server (at time t₄), the floor controller enables the first user terminal to recapture the floor, by activating the PTT-key button again. In this way, missing parts to the speech can be promptly added by the first user terminal, if accidentally the PTT-key button is released thus avoiding to send inconsistent translations to the second user terminal. Also, by recapturing the floor, the speech can be eventually reformulated by the first user terminal, if it has been realised that a mistake has occurred. Furthermore, in the same period of time the floor remains locked against the second user terminal. In this way, the possibility to start speaking/answering at the second user terminal is prevented until the translation is completed, thus avoiding possible overlapping of the transmitted data.

As a further aspect of the preferred embodiment, the floor condition is notified to the first and/or to the second user terminal by means of a floor-notification-means which comprises an audible and/or an optical indication generator to generate audible or optical messages in the respective source/target language.
The notification of the floor condition to the first user terminal in the source language comprises a message divided in two parts, wherein the first part indicates "floor granted" and it is provided during the period between the request of the floor and the start of the speech at the first user terminal (t₀-t₁). The second part indicates "translating" and it is provided during the period between the start of the data input to the translation server from the first user terminal and the completion of the translated output from the translation server to the second user terminal (t₁-t₄).
The notification of the floor condition to the second user terminal in the target language also comprises a message divided in two parts. The first part indicates "floor taken by the first user terminal" and it is provided during the period in which the PTT-key button is activated by the first user terminal (t₀-t₃). The second parts indicates "floor kept/retained by the translation server" and it is provided during the period between the deactivation of the PTT-key button and the completion of output of the translation from the translation server (t₃-t₄).
Finally, during the period after the completion of output of the translation from the translation server (t>t₄), the floor-notification-means sends a message to both user terminals indicating "floor released by the translation server" in the respective source/target language. After receiving this message, the floor can be singly seized by each user terminal.

As an improvement of the preferred embodiment, the Push-To-Translate-Speech translation service involves more than one second user terminal and more than one target language (multi-party / group-mode), whereas the target language is defined a priori by the second user terminal. In such a situation, the translation server comprises more than one data-storing-means, and more than one data-processing-means and the translated output will depend on the target language characteristics. In a multi-party session, therefore, the floor controller releases the floor only after the translated output with the longest duration has been completed. Since the translation duration may vary from sentence to sentence, the output with the longest duration is determined in real-time and not in advance by the target language selection. The termination of the latest translated output and the consequent release of the floor will be notified to all user terminals participating to the PTTS translation service in the respective source/target language.

Further advantages of the present invention consist in accurate and unambiguous floor control notifications for all user terminals of PTTS service, in covering two-party, multi-party, and multi-language operation of PTTS service, and in having the possibility to work with standard commercial off-the-shelf Push-To-Talk clients/terminals. Moreover the system and the method of the present invention are useful for proprietary differentiation and/or stepwise upgrade of translation service.

The invention is not restricted to the above described specific aspects and embodiments but can also be carried out in numerous modifications and combinations thereof.

## Claims

1. A floor control method of a Push-To-Translate-Speech translation service comprising a block-wise speech transmission over a wireless network (3), from a first user terminal (1) in the source language to a second user terminal (2), or to a plurality of second user terminals in the target language, employing a Push-To-Talk (PTT) terminal (1, 2) with a PTT-key and a translation server (4), the method comprising:
requesting the floor at the first user terminal (1);
granting the floor to the first user terminal (1) (at time t₀) giving the possibility to start speaking at this terminal (at time t₁) by activating the PTT-key button;
receiving data in the translation server (4) from the first user terminal (1) in the source language;
locking the floor against the second user terminal (2) preventing any possibility to take the floor and start speaking at this terminal;
storing the received data in a data-storing-means (6) comprised in the translation server (4);
processing the stored data by translating them from the source language to the target language;
starting the output of the processed data to the second user terminal (2) in the target language (time t₂);
maintaining the floor locked against the second user terminal (2), after the PTT-key button has been deactivated by the first user terminal (1) (at time t₃);
completing the output of the processed data to the second user terminal (2) in the target language (at time t₄); releasing the floor in favour of both user terminals (1, 2); and
notifying the first and/or the second user terminal (1, 2) about the floor condition before, during, and after the translation process.

2. The method of claim 1, wherein the Push-To-Translate-Speech translation service involves more than one second user terminal (2) and more than one target language, wherein the target language is defined a priori by the respective second user terminal (2).

3. The method of claim 2, wherein the duration of the translated output depends on the target language characteristics and, wherein the floor is released only after the translated output with the longest duration has been completed.

4. The method of claim 3, wherein the translated output with the longest duration is determined in real-time and not in advance by the target language selection.

5. The method of one of the preceding claims, wherein the floor can be recaptured by the first user terminal (1) by activating the PTT-key button again, during the period between the deactivation of the PTT-key button (at time t₃) and the completion of output of the translation from the translation server (4) (at time t₄).

6. The method of one of the preceding claims, wherein the notification of the floor condition to the first and/or to the second user terminal (1, 2) is performed in the form of an audible or optical message and in the respective source/target language.

7. The method of one of the preceding claims, wherein the notification of the floor condition to the first user terminal (1) in the source language comprises a message divided in two parts, the first indicating "floor granted", during the period between the request of the floor and the start of the speech at the first user terminal (1) (t₀-t₁), and the second indicating "translating", during the period between the start of the data input to the translation server (4) from the first user terminal (1) and the completion of the translated output from the translation server (4) to the second user terminal (2) (t₁-t₄).

8. The method of one of the preceding claims, wherein the notification of the floor condition to the second user terminal (2) in the target language comprises a message divided in two parts, the first indicating "floor taken by the first user terminal", during the period in which the PTT-key button is activated by the first user terminal (1) (t₀-t₃), and the second indicating "floor kept/retained by the translation server", during the period between the deactivation of the PTT-key button and the completion of output of the translation from the translation server (4) (t₃-t₄).

9. The method of one of the preceding claims, wherein the notification of the floor condition to both user terminals (1, 2) in the respective source/target language comprises a message indicating "floor released by the translation server", during the period after the completion of output of the translation from the translation server (4) (t>t₄), wherein, after this message, the floor can be singly seized by each user terminal (1, 2).

10. An apparatus of a Push-To-Translate-Speech translation service comprising a block-wise speech transmission, from a first user terminal (1) in the source language to a second user terminal (2), or to a plurality of second user terminals in the target language, employing a Push-To-Talk (PTT) terminal (1, 2) with a PTT-key button, for transmitting and receiving data information, a translation server (4), for translating sentence by sentence, or consecutive sentences, in one direction at a time and connected to the terminals (1, 2) over a wireless network (3), comprising:
receiver (5) to receive the data coming from the user terminals (1, 2);
data-storing-means (6) connected to the receiver (5) to store the received data waiting to be processed;
data-processing-means (7) connected to the data-storing-means (6) to process the stored data by translating them from the source language to the target language;
transmitter (8) connected to the data-processing-means (7) to send the data to the user terminals (1, 2);
floor controller (9), connected to the translation server (4), to grant the floor to the first user terminal (1) and to lock the floor against the second user terminal (2),
wherein the floor controller (9) maintains the floor locked against the second user terminal (2), after the PTT-key has been deactivated at the first user terminal (1) and releases the floor in favour of both user terminals after the complete translation output has been sent by the translation server (4) to the second user terminal (1);
floor-notification-means (10), connected to the floor controller (9) and to the transmitter (8), to notify the first and/or the second user terminal (1, 2) about the floor condition; and
controlling unit (11) connected to all the means to perform an overall control of the means.

11. The apparatus of claim 10, wherein the floor controller (9) can be either an internal or an external component of the translation server (4).

12. The apparatus of one of the claims 10 and 11, wherein the floor-notification-means (10) comprises an audible and/or optical indication generator.

13. The apparatus of one of the claims 10 to 12, wherein the Push-To-Translate-Speech translation service involves more than one second user terminal (2) and more than one target language, wherein the translation server (4) comprises more than one data-storing-means (6), and more than one data-processing-means (7).
